Europäisches Patentamt

European Patent Office

Office européen des brevets

(11) Veröffentlichungsnummer: **0 268 018**
**A2**

## (12) EUROPÄISCHE PATENTANMELDUNG

(21) Anmeldenummer: **87111379.1**

(22) Anmeldetag: **06.08.87**

(51) Int. Cl.4: **H02P 7/00** , H02P 7/638

(30) Priorität: **15.11.86 DE 3639197**

(43) Veröffentlichungstag der Anmeldung:
**25.05.88 Patentblatt 88/21**

(84) Benannte Vertragsstaaten:
**CH DE FR GB LI SE**

(71) Anmelder: **Rheinmetall GmbH**
**Ulmenstrasse 125 Postfach 6609**
**D-4000 Düsseldorf(DE)**

(72) Erfinder: **Schoroth, Anno**
**Am Lützbach 8**
**D-5330 Königswinter 21(DE)**

(54) **Vierquadrantenantrieb mit einem Gleichstrommotor.**

(57) Ein Gleichstrommotor M mit kontinuierlich einstellbaren Leistungsstellern $V_1$, $V_2$ o. dgl. für die
Wicklungen des Gleichstrommotors M ist zur Vereinfachung des Gesamtaufbaues eines Vierquadrantenantriebes und zur Verringerung des Aufwandes für
die Leistungselektronik sowie der Verluste in den
Leistungsstellern als Reihenschluß-Umkehrmotor
ausgebildet. Für die beiden Drehrichtungen enthält
der Reihenschlußumkehrmotor M jeweils eine Feldwicklung $L_1$, $L_2$, wobei für jeweils eine Feldwicklung
nur ein Einquadrantenleistungssteller $V_1$, $V_2$ vorgesehen ist. Für die beiden Leistungssteller ist eine
Regler-Treiberschaltung $A_1$ vorgesehen, die als mit
Fühlern $R_1$, $R_2$ für den Motorstrom verbundener
Stromregler arbeitet. Dieser Vierquadrantenantrieb
benötigt gegenüber bekannten gattungsgleichen Antrieben eine reduzierte Zahl der Leistungssteller und
der Freilaufdioden $V_3$, $V_4$, wodurch sich das Einbauvolumen und der Aufwand für die Regelung und
insbesondere die Leistungselektronik sowie die Verluste im Leistungsteil erheblich reduzieren.

EP 0 268 018 A2

FIG.3

## Vierquadrantenantrieb mit einem Gleichstrommotor

Die Erfindung betrifft einen Vierquadrantenantrieb mit einem Gleichstrommotor nach dem Oberbegriff des Patentanspruchs 1.

Bekannte Antriebsanordnungen für einen Vierquadrantenantrieb, also einen Rechts-bzw. Linkslauf mit jeweils den Betriebsarten "Antreiben" und "Bremsen" werden, falls mit einer Versorgungsspannung gearbeitet werden soll, bisher auf der Steuerungsseite für einen Reihenschlußmotor herkömmlicher Bauart als Brücken oder H-Schaltungen ausgeführt.

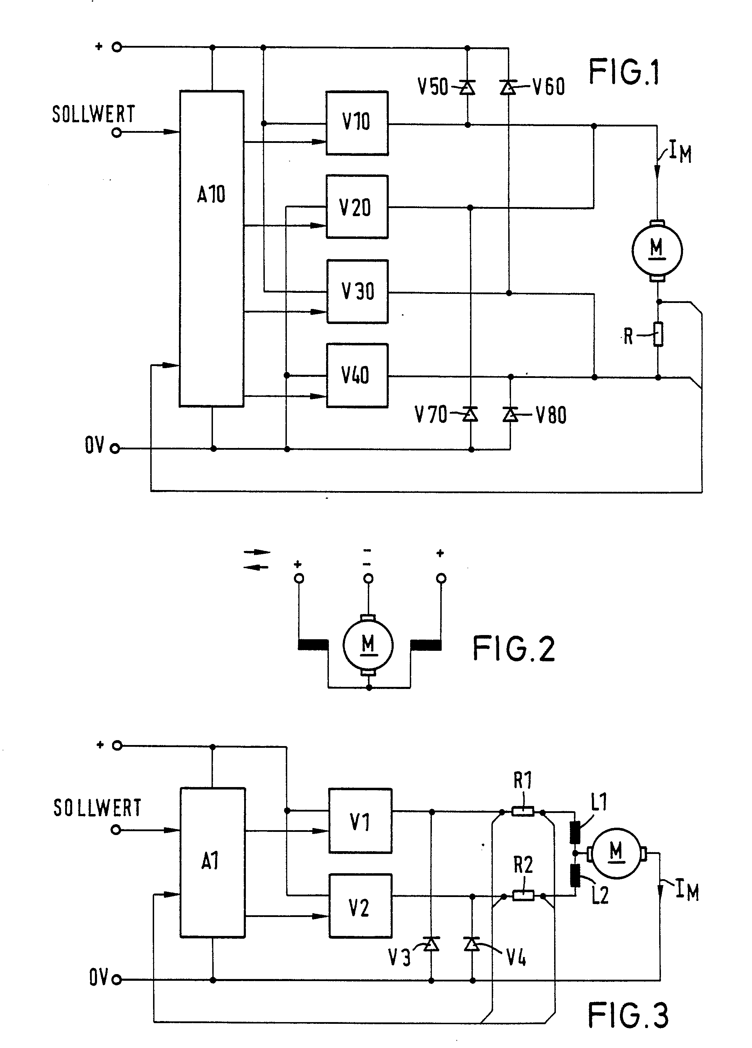

Eine entsprechende bekannte Anordnung ist in der Fig. 1 veranschaulicht. Bei dieser Anordnung ist eine Regler-Treiber-Schaltung $A_{10}$ mit einem Sollwerteingang für die Stellgröße "Motorstrom" $I_M$ vorgesehen. Durch überlagerte Kreise kann auch eine Drehzahl-oder Positionsregelung aufgebaut werden. Die Regler-Treiber-Schaltung $A_{10}$ steuert vier Leistungssteller $V_{10}$, $V_{20}$, $V_{30}$, $V_{40}$ so an, daß der Motor M, je nach Drehrichtung, über die Leistungssteller $V_{10}$ und $V_{40}$ bzw. $V_{20}$ und $V_{30}$ ein-bzw. ausgangsseitig an der Versorgungsspannung liegt. Zusätzlich werden Freilaufdioden $V_{50}$ bis $V_{80}$ benötigt. Es sind jeweils ein Leistungssteller, der Motor und der zweite Leistungssteller in Serie geschaltet. Damit ergibt sich insgesamt gesehen ein erheblicher Steueraufwand, ein großes Einbauvolumen und auch ein beträchtlicher Leistungs-bzw. Spannungs verlust an den beiden jeweils mit dem Motor M in Serie geschalteten Leistungsstellern.

Aufgabe der Erfindung ist die Schaffung eines Vierquadrantenantriebes der eingangs genannen Art, bei dem der Gesamtaufbau vereinfacht und der Aufwand für die Regelung sowie insbesondere die Verluste in den Leistungsstellern wesentlich verringert werden.

Gelöst wird diese Aufgabe durch die im Kennzeichen des Patentanspruchs 1 aufgeführten Merkmale. Vorteilhafte Ausgestaltungen und Weiterbildungen der Erfindung gehen aus den Merkmalen des Unteranspruches hervor.

Durch die erfindungsgemäße Ausführung wird der Aufwand an Leistungselektronik und Schutz, das Volumen der Leistungselektronik sowie die Verlustleitung gegenüber der bekannten Konstruktion wesentlich verringert. Es ergibt sich, da jeweils nur ein Leistungssteller mit dem Motor in Reihe verbunden ist, ein geringerer Spannungsverlust bzw. eine größere Spannungsreserve für den Betrieb des Motors. Dies fällt besonders bei niedrigen Versorgungsspannungen, wie sie in Fahrzeugen vorkommen - beispielsweise 24 V - ins Gewicht.

Die Erfindung wird anhand der Zeichnung näher erläutert. Es zeigt:

Fig. 1: eine Brückenschaltung des vorbeschriebenen bekannten Vierquadrantenantriebes;

Fig. 2: ein Schaltschema eines Reihenschlußumkehrmotors und

Fig. 3: ein Gesamtschaltschema des erfindungsgemäßen Vierquadrantenantriebes mit zwei Einquadrantenstellern.

Nach den Figuren 2 und 3 enthält der vorgesehene Reihenschluß-Umkehrmotor M zwei Feldwicklungen $L_1$, $L_2$, die beide (hier motorintern) mit der Ankerwicklung des Motors verbunden sind. Je nach dem, in welche der beiden Feldwicklungen $L_1$ oder $L_2$ der (größere) Motorstrom eingeprägt wird, erfolgt Rechts-oder Linkslauf. Jede Feldwicklung $L_1$ bzw. $L_2$ ist über einen von einer Regler-Treiberschaltung $A_1$ mit Sollwerteingang gesteuerten Leistungssteller $V_1$ bzw. $V_2$ beispielsweise mit dem Pluspol der Versorgungsspannung verbunden. Der zweite Ankeranschluß liegt dann am 0V-Potential. Die Zuordnung von Pluspol und 0V-Potential der Versorgungsspannung kann auch ohne Beeinträchtigung der Funktion getauscht werden, wenn auf die Polarität der eingedeckten Elemente geachtet wird. Es sind nunmehr nur zwei Freilaufdioden $V_3$, $V_4$ vorhanden.

Je nach der gewünschten Drehrichtung bzw. Drehmomentenrinctung wird einer der Leistungssteller, z. B. $V_1$, die dazugehörige Motorwicklung $L_1$ und der Anker des Motors aktiviert, wobei die Regler-Treiberschaltung über den Leistungsregler Größe und Richtung des Drehmomentes des Motors bestimmt. Bei Ansteuerung über $V_2$, $L_2$ wird ein Moment in der entgegengesetzten Richtung erzeugt. Der über die Fühler $R_1$ bzw. $R_2$ erfaßte Motorstrom $I_M$folgt der dem Sollwerteingang vorgegebenen Führungsgröße.

Aus dem Mehraufwand für die zweite Feldwicklung $L_2$ des Motors M resultieren im Vergleich mit der bekannten Ausführung nach Fig. 1 erhebliche Vorteile. Gegenüber der bekannten Ausführung halbiert sich die Zahl der Leistungshalbleiter und der Freilaufdioden, so daß nur noch eine von jeweils 4 auf 2 reduzierte Zahl dieser Elemente benötigt wird. Das Einbauvolumen reduziert sich durch den Wegfall der Leistungshalbleiter und der zugehörigen Kühlkörper. Die Verlustleistung verringert sich, da nur noch ein Leistungshalbleiter pro Drehrichtung notwendig ist und die dem Motor zur Verfügung stehende Spannung ist um den Spannungsabfall an einem Leistungshalbleiter, der immerhin einige V betragen kann, höher als bei einer Brückenschaltung.

**Ansprüche**

1. Vierquadrantenantrieb mit einem Gleichstrommotor und kontinuierlich einstellbaren Leistungsstellern o. dgl. für die Wicklung des Gleichstrommotors, **dadurch gekennzeichnet,** daß der Gleichstrommotor (M) als Reihenschluß-Umkehrmotor ausgebildet ist und zwei jeweils eine den beiden Drehrichtungen zugeordnete Feldwicklungen (L$_1$), (L$_2$) enthält, für die nur je ein Einquadrantenleistungssteller (V$_1$), (V$_2$) vorgesehen ist.

2. Vierquadrantenantrieb nach Anspruch 1, **dadurch gekennzeichnet,** daß für die beiden Leistungssteller (V$_1$), (V$_2$) eine Regler-Treiberschaltung (A$_1$) vorgesehen ist, die als mit zwei Fühlern (R$_1$, R$_2$) für den Motorstrom verbundener Stromregler arbeitet.

FIG.1

SOLLWERT

A10

V10

V20

V30

V40

V50

V60

V70

V80

$I_M$

M

R

FIG.2

M

SOLLWERT

A1

V1

V2

R1

R2

V3

V4

L1

L2

M

$I_M$

0V

FIG.3